# DEMANDE DE BREVET EUROPEEN

(11) **EP 3 168 517 A1**
(43) Date de publication de la demande: **17.05.2017**
(21) Numéro de dépôt: 15306789.7
(22) Date de dépôt: 10.11.2015
(51) Int. Cl.: F16L 11/02, F03G 7/05, F16L 33/00, F16L 33/30, F16L 33/32

(54) **MODULE POUR LE TRANSPORT D'UN FLUIDE ET MÉTHODE DE RACCORDEMENT D'UNE STRUCTURE TISSÉE ET D'UN RACCORD D'EXTRÉMITÉ**

(71) Demandeur: Ets A. Deschamps Et Fils, 16400 La Couronne (FR)
(72) Inventeur: DESCHAMPS, Georges-Paul, 16400 Voeuil et Giget (FR)
(74) Mandataire: Cabinet Plasseraud

(57) **Abrégé**

La présente invention concerne un module pour le transport d'un fluide, comprenant une structure tissée (18) formant une conduite tubulaire et au moins un raccord (10) d'extrémité placé à une extrémité de ladite structure tissée (18), ledit raccord (10) d'extrémité comprenant un corps (11) principal délimitant un canal (12) interne pour le passage dudit fluide.

Selon l'invention, la paroi interne dudit corps (11) délimitant ledit canal (12), ou la paroi externe dudit corps (11) délimitant la surface latérale externe de ce corps, étant annulaire et présentant au moins un épaulement (13) définissant une face (14) d'appui interne, respectivement externe, pour la réception d'au moins une bague (15, 16), l'ancrage de l'extrémité libre de ladite structure tissée (18) dans ledit raccord (10) est obtenu uniquement par frottement des faces de ladite extrémité libre avec les surfaces de ladite ou desdites bagues (15, 16) et de ladite paroi interne, respectivement externe, dudit corps (11) principal.

## Description

### ARRIERE-PLAN DE L'INVENTION

### Domaine de l'invention

La présente invention concerne un module pour le transport d'un fluide, notamment de l'eau de mer.

Elle concerne encore une méthode de raccordement d'une structure tissée et d'un raccord d'extrémité, ainsi qu'un dispositif pour la mise en oeuvre de cette méthode.

### Arrière-plan technologique

Il est connu de mettre en oeuvre des conduites flexibles en milieu marin pour le transport de fluide, notamment des hydrocarbures ou de l'eau de mer.

Ces conduites installées en grande profondeur doivent résister à des tensions très importantes. C'est notamment le cas des conduites dites montantes, reliant une structure flottante située en surface au fond marin.

Le poids de ces conduites montantes, de grande dimension longitudinale, génère en partie supérieure de celles-ci des tensions, notamment de traction, très importantes.

Il est donc impératif de pouvoir limiter le poids de ces conduites.

Il est connu de placer à chaque extrémité de chaque conduite, un raccord d'extrémité.

La mise en oeuvre d'un tel raccord d'extrémité autorise non seulement une reprise des efforts s'exerçant sur la conduite, mais permet également l'assemblage de conduites entre elles.

Bien entendu, les efforts de traction s'exerçant sur la conduite se répercutent sur chaque raccord d'extrémité.

Le raccordement de la conduite à son raccord d'extrémité doit donc présenter une grande résistance à l'arrachement.

A cela peut s'ajouter le déplacement oscillatoire de la structure flottante en surface, lié à l'état de la mer, par exemple, en cas de houle, lequel peut conduire à une fatigue accrue de la liaison conduite/raccord d'extrémité. Dans des conditions extrêmes, ce déplacement peut conduire à un risque élevé d'arrachement.

Diverses solutions techniques ont été proposées pour tenter de pallier ces problèmes techniques.

A titre illustratif, il est connu de noyer l'extrémité libre de la conduite dans un matériau polymère durcissable injecté dans une chambre prévue à cet effet dans le raccord d'extrémité correspondant.

La gangue formée après durcissement du polymère vient emprisonner l'extrémité libre de la conduite dans cette chambre du raccord d'extrémité.

Cependant, on observe que les solutions de l'état de l'art, conduisent typiquement à une altération des conduites flexibles.

Un affaiblissement de la résistance mécanique de cette conduite flexible est, par exemple, constaté lorsque certains fils de l'extrémité libre de la conduite flexible sont endommagés, voire coupés par le passage de la tige d'une attache de fixation.

Quoiqu'il en soit, la séparation de la conduite flexible et de son raccord d'extrémité requiert toujours la destruction de l'une, voire des deux parties. Ceci résulte un surcoût non négligeable pour l'exploitant.

Enfin, ces solutions de l'état de l'art ne garantissent pas une homogénéité de la tenue mécanique sur l'ensemble de la liaison conduite flexible/raccord d'extrémité.

Il existe donc un besoin pressant pour une conduite flexible plus légère et pour un raccord d'extrémité dont la résistance à l'arrachement de la conduite est améliorée.

### Objet de l'invention

La présente invention vise à pallier les inconvénients de l'art antérieur en proposant un module pour le transport d'un fluide, simple dans sa conception et dans son mode opératoire, léger et économique, répondant aux inconvénients ci-dessus mentionnées.

Notamment, un objet de la présente invention est un module pour le transport d'un fluide dont le raccord d'extrémité présente une résistance accrue à l'arrachement de la conduite flexible tout en préservant l'intégrité de cette dernière.

Encore un objet de la présente invention est un tel module dont les différentes parties constitutives peuvent être démontées sans altération de celles-ci.

### BREVE DESCRIPTION DE L'INVENTION

A cet effet, l'invention concerne un module pour le transport d'un fluide, comprenant une structure tissée formant une conduite tubulaire et au moins un raccord d'extrémité placé à une extrémité de ladite structure tissée, ledit raccord d'extrémité comprenant un corps principal délimitant un canal interne pour le passage dudit fluide.

Selon l'invention, la paroi interne dudit corps délimitant ledit canal, ou la paroi externe dudit corps délimitant la surface latérale externe de ce corps, étant annulaire et présentant au moins un épaulement définissant une face d'appui interne, respectivement externe, pour la réception d'au moins une bague, l'ancrage de l'extrémité libre de ladite structure tissée dans ledit raccord est obtenu uniquement par frottement des faces de ladite extrémité libre avec les surfaces de ladite ou desdites bagues et de ladite paroi interne, respectivement externe, dudit corps principal.

Bien entendu, ce module peut consister en une structure tissée comportant à chacune de ses extrémités, un raccord d'extrémité.

La structure tissée peut être enduite ou recevoir dans sa partie centrale des éléments de renfort tels que des barres pour rigidifier celle-ci et éviter son écrasement. Néanmoins, pour assurer la légèreté de chaque module, chaque raccord d'extrémité du module est assemblé à la seule structure tissée formant une conduite tubulaire. Il en résulte, notamment, que cette dernière n'est pas entourée d'une peau externe métallique ou autre.

Cette structure tissée peut être notamment enduite en vue d'assurer son étanchéité. A titre d'exemple, l'enduction est réalisée par un procédé d'enduction utilisant du polyuréthane.

Il résulte de la définition du module que chaque extrémité libre de la structure tissée étant emprisonnée dans la partie centrale de chaque raccord, la face d'appui annulaire étant interne à chaque raccord, le corps de ce raccord d'extrémité est extérieur à la structure tissée correspondante. Alternativement, chaque extrémité libre de la structure tissée étant emprisonnée sur le pourtour de chaque raccord, la face d'appui annulaire étant externe à chaque raccord, le corps de ce raccord d'extrémité est intérieur à la structure tissée correspondante.

De préférence, le corps principal de chaque raccord d'extrémité est d'un seul tenant, et ne résulte donc pas de l'assemblage de pièces initialement distinctes.

Rappelons qu'un épaulement est un changement de section d'une pièce, ici le corps principal du raccord, ménageant une face destinée à servir d'appui à une autre pièce, ici les bagues.

Rappelons également que cette structure tissée est souple.

Chaque bague est une pièce annulaire pleine ou creuse d'un seul tenant. Elle n'est pas nécessairement fermée.

De plus, lorsque ledit au moins un épaulement est placé dans le canal interne du raccord, et que par conséquent, le corps principal du raccord est extérieur à la structure tissée, chaque bague peut comporter plusieurs parties, ou secteurs, de bague afin de faciliter leur montage. Ces parties de bague sont simplement mises bout à bout pour former la bague correspondante. Les contraintes s'exerçant sur ces parties de bague en mer et en profondeur assurent l'assemblage de celles-ci sans qu'il soit nécessaire d'utiliser des attaches ou autre.

De préférence, au moins une de ces bagues présente un espace vide interne permettant de plaquer l'extrémité libre de la structure tissée contre la paroi interne ou latérale externe du corps principal du raccord pour générer des frottements. Lorsque les bagues sont placées l'une à côté de l'autre sur la face d'appui, elles sont avantageusement concentriques et en contact ou sensiblement en contact de manière à générer des frottements lorsque l'extrémité libre de la structure tissée est engagée entre elles.

A titre purement illustratif, ces bagues peuvent être réalisées dans un matériau métallique tel que de l'acier, dans une matière plastique non déformable ou encore dans des matériaux composites.

Lorsque les fils de l'extrémité libre de la structure tissée n'ont pas été préalablement enduits, l'ancrage est obtenu uniquement par le frottement de ces fils avec les surfaces de chaque bague et de ladite paroi interne ou externe du corps principal.

Lorsque ces fils sont enduits, l'ancrage est obtenu par le frottement de la surface d'enduction, i.e. de la surface de l'extrémité libre de la structure tissée ainsi enduite, avec les surfaces de chaque bague et de ladite paroi interne ou externe du corps principal.

Dans différents modes de réalisation particuliers de ce module, chacun ayant ses avantages particuliers et susceptibles de nombreuses combinaisons techniques possibles:
- ledit raccord comprenant au moins deux bagues, lesdites bagues sont reçues sur ladite face d'appui en étant superposées ou placées en contact l'une à côté de l'autre pour emprisonner l'extrémité libre correspondante de ladite structure tissée.
- ledit raccord comportant deux bagues, l'extrémité libre de ladite structure tissée enveloppe lesdites bagues en étant engagée entre celles-ci pour décrire un S, ledit engagement augmentant la résistance au glissement des faces de ladite extrémité libre.

Bien entendu, l'engagement de l'extrémité libre de ladite structure tissée avec lesdites bagues peut prendre toute autre forme.
- ledit raccord comporte une partie de fixation à un raccord d'un autre module ou à une structure flottante.

De manière avantageuse, cette partie de fixation vient plaquer la portion de l'extrémité libre de la structure tissée recouvrant la bague placée en vis-à-vis de cette partie de fixation avec laquelle elle vient en contact pour augmenter encore les frottements.
- au moins une desdites bagues présente une section transversale droite, pleine ou creuse, de forme polygonale régulière ou non.

A titre d'exemple, la forme de cette section transversale droite est par exemple choisie dans le groupe comprenant carrée, rectangulaire, en parallélogramme, trapézoïdale.
- lesdites bagues présentent une section transversale droite identique.

Bien entendu, les bagues peuvent présenter des sections transversales droites différentes.
- au moins une desdites bagues présente des arêtes chanfreinées pour éviter d'endommager l'extrémité libre de ladite structure tissée.

Ces arêtes sont donc dépourvues d'angles saillants ou vifs. Les chanfreins sont de préférence arrondis.
- la surface externe d'au moins une desdites bagues comporte un revêtement antidérapant et/ou un relief de surface permettant d'accroître le coefficient de frottement entre les faces de l'extrémité libre de ladite structure tissée et ladite bague.

A titre d'exemple, la surface d'appui de la bague peut présenter une alternance de crêtes et de sillons qui sont recouverts par une couche mince d'un matériau dur à fort coefficient de frottement. Cette couche mince a une faible épaisseur pour ne pas modifier l'état de surface de la surface d'appui de la bague. A titre d'exemple, chaque bague étant métallique, cette couche mince est du nitrure de titane, lequel est connu pour présenter une excellente adhérence.

Alternativement, la face d'appui de la bague peut présenter des stries, des pointes de diamant, ...
- les extrémités libres de ladite structure tissée présentent une armure distincte de celle, et/ou des fils de trame différents de ceux, de la partie centrale de ladite structure tissée pour autoriser une variation élastique du diamètre de ladite structure tissée.

Cette variation élastique peut consister en un élargissement ou rétrécissement de l'extrémité libre de ladite structure tissée lors de son engagement dans ledit raccord d'extrémité.

De préférence, l'armure de chaque extrémité libre est une armure toile. Bien entendu, les armures d'extrémité de la structure tissée peuvent ne pas être identiques.

De manière avantageuse, lesdits fils de trame de chaque extrémité libre de ladite structure tissée sont réalisés dans un matériau plus élastique que celui constitutif des fils de trame de la partie centrale de ladite structure tissée.
- l'extrémité libre de ladite structure tissée comporte des pièces tissées individuelles formant une corolle, chaque pièce tissée étant obtenue par découpe de fils de trame de ladite extrémité libre,
- ladite structure tissée formant une conduite tubulaire de transport d'un fluide est une structure tissée tridimensionnelle d'un seul tenant.

De préférence, ladite structure tissée comporte dans sa partie centrale des éléments allongés, lesdits éléments allongés étant intégrés dans ladite structure tissée en étant alignés sur la périphérie de cette structure pour former au moins une ligne circonférentielle ou une hélice et en ayant leur axe principal perpendiculaire ou sensiblement perpendiculaire à l'axe longitudinal de ladite structure tissé.

A titre d'exemple, ces éléments allongés sont des tubes permettant le passage au travers de la structure tissée, d'attaches pour la fixation de barres de rigidification permettant de rigidifier cette structure tissée afin de résister à l'écrasement.

La présente invention concerne également une conduite flexible de transport d'un fluide, par exemple d'eau de mer, comprenant plusieurs modules tels que décrits précédemment, lesquels sont assemblés entre eux.

De préférence, pour chaque raccord de ladite conduite flexible, ledit épaulement est placé sur la paroi interne du corps principal correspondant de sorte que la face d'appui étant ainsi interne, l'extrémité libre de ladite structure tissée correspondante est ancrée dans ledit raccord en passant dans son canal interne et lesdites structures tissées des différents modules ainsi assemblés définissent un chemin continu pour le passage dudit fluide, ce dernier étant ainsi uniquement en contact avec lesdites structures tissées lors de son transport.

De manière avantageuse, on évite ainsi que lesdits raccords ne puissent modifier de manière sensible la température du fluide circulant dans ladite conduite flexible. On supprime ainsi tout pont thermique. En outre, le fluide transporté n'étant à aucun moment en contact avec les raccords d'extrémité, on peut transporter avantageusement des fluides qui seraient incompatibles avec un matériau constitutif des raccords.

De plus, on constate l'absence de perte de charge ou modification de l'écoulement, pas de zone d'accumulation de débris.

La présente invention concerne aussi une méthode de raccordement d'un raccord d'extrémité et d'une structure tissée définissant une conduite tubulaire de transport de fluide, ledit raccord d'extrémité comprenant un corps principal de forme délimitant un canal interne pour le passage dudit fluide.

Selon l'invention, la paroi interne dudit corps délimitant ledit canal ou la paroi externe dudit corps délimitant sa surface latérale externe, étant annulaire et présentant au moins un épaulement définissant une face d'appui interne, respectivement externe, pour la réception de deux bagues, lesquelles sont destinées à être reçues sur ladite face d'appui en étant superposées ou placées en contact l'une à côté de l'autre pour emprisonner l'extrémité libre correspondante de ladite structure tissée, ladite méthode comporte les étapes suivantes:
a) on introduit l'extrémité libre de ladite structure tissée entre l'ensemble formé par lesdites deux bagues, et ladite paroi interne ou externe dudit corps annulaire,
b) on retourne l'extrémité libre de ladite structure tissée, une première fois vers l'arrière en la coudant sur ledit ensemble, puis, lesdites bagues étant espacées l'une de l'autre, une seconde fois en la pliant sur la bague la plus proche de ladite surface d'appui de sorte à venir envelopper cette bague,
c) on plaque l'autre bague contre la bague ainsi enveloppée de sorte que l'extrémité libre de ladite structure tissée est emprisonnée entre ces deux bagues, puis
d) ayant engagé l'extrémité libre de ladite structure tissée entre cette autre bague et l'ensemble formé par ladite paroi interne ou externe et une portion de ladite extrémité libre résultant de l'étape a), on retourne l'extrémité libre de ladite structure tissée pour envelopper cette autre bague, le passage de l'extrémité libre de ladite structure tissée entre ces bagues définissant une forme en S de sorte que l'ancrage de l'extrémité libre de ladite structure tissée dans ledit raccord est obtenu uniquement par frottement des faces de ladite extrémité libre avec les surfaces desdites bagues et de ladite paroi interne, respectivement externe, dudit corps annulaire.

De préférence, on assemble une partie de fixation audit corps principal, ladite partie de fixation venant plaquer l'extrémité libre de ladite structure tissée sur la bague qu'elle enveloppe au moins partiellement.

Avantageusement, au préalable, on coupe des fils de trame de l'extrémité libre de ladite structure tissée pour définir des pièces tissées individuelles de manière à faciliter l'engagement de ladite extrémité libre dans ledit raccord.

La présente invention concerne encore un dispositif pour la mise en oeuvre de la méthode de raccordement d'un raccord d'extrémité et d'une structure tissée définissant une conduite tubulaire de transport de fluide, telle que décrite précédemment.

Selon l'invention, ce dispositif comprend :
- une paroi annulaire définissant une zone centrale de réception de ladite structure tissée,
- la surface latérale externe de ladite paroi annulaire comprend un support pour recevoir et supporter ledit raccord et des moyens de déplacement individuel de chaque bague dudit raccord par rapport à ladite surface d'appui interne ou externe.

De préférence, l'extrémité supérieure de ladite paroi annulaire comporte un rebord arrondi pour faciliter le pliage de l'extrémité libre de ladite structure tissée.

Cette paroi annulaire peut également être entourée d'une plateforme annulaire pour le déplacement des opérateurs.

De manière avantageuse, chaque moyen de déplacement individuel d'une bague comporte des bras de préhension de ladite bague, lesquels sont mobiles en translation le long de ladite paroi annulaire pour éloigner ou rapprocher la bague correspondante de ladite surface d'appui tout en étant escamotables ou de dimension longitudinale ajustable pour autoriser le passage de l'extrémité libre de ladite structure tissée.

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels :
- la Figure 1 représente schématiquement une vue en coupe d'un raccord d'extrémité selon un premier mode de réalisation de la présente invention, les bagues étant non représentées ;
- la Figure 2 est une vue partielle et en coupe du raccord de la Fig. 1, l'extrémité libre d'une structure tissée étant engagée et retenue prisonnière dans ce raccord ;
- la Figure 3 représente schématiquement une vue partielle et en perspective d'un raccord d'extrémité selon un second mode de réalisation de la présente invention ;
- la Figure 4 est une vue partielle et en coupe du raccord de la Fig. 3, une pièce de fixation venant recouvrir le corps de base et les bagues de ce raccord ;

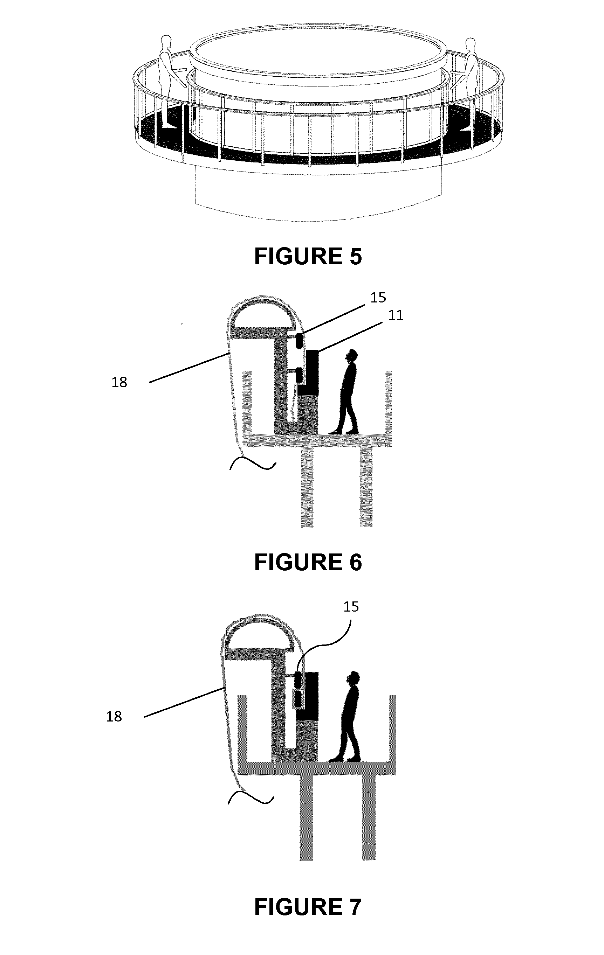

- la Figure 5 est une vue en perspective d'un dispositif pour le raccordement d'un raccord d'extrémité et d'une structure tissée définissant une conduite tubulaire de transport de fluide, selon un mode de réalisation particulier de la présente invention ;
- la Figure 6 est une vue partielle et en coupe du dispositif de la Fig. 6 montrant une étape de la méthode de raccordement d'un raccord d'extrémité et d'une structure tissée, dans laquelle la bague inférieure du raccord d'extrémité a été déplacée après introduction de l'extrémité libre de ladite structure tissée dans le raccord pour emprisonner cette extrémité libre entre la face d'appui du raccord et cette bague ;
- la Figure 7 est une vue partielle et en coupe du dispositif de la Fig. 6, montrant une étape ultérieure de la méthode de raccordement dans laquelle la bague supérieure a été déplacée après enveloppement de la bague inférieure avec l'extrémité libre de ladite structure tissée pour être plaquée contre la bague inférieure ainsi enveloppée ;

### DESCRIPTION DETAILLEE DE MODE DE REALISATION DE L'INVENTION

Tout d'abord, on note que les figures ne sont pas à l'échelle.

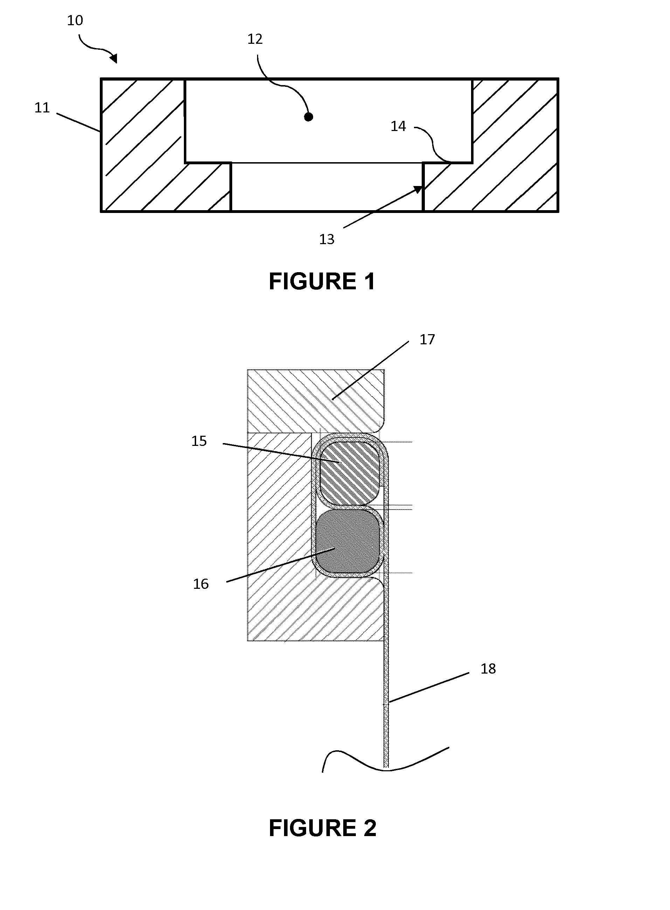

Les Figures 1 et 2 représentent schématiquement un module pour le transport d'un fluide, notamment de l'eau de mer, selon un mode de réalisation particulier de la présente invention.

Ce module comporte une structure tissée comportant à chacune de ses extrémités, un raccord 10 d'extrémité métallique.

Chaque raccord 10, ici entièrement annulaire, comprend un corps 11 principal délimitant un canal 12 interne pour le passage de ce fluide.

La paroi interne de ce corps 11 délimitant le canal 12 interne étant annulaire, cette dernière présente un épaulement 13 définissant une face 14 d'appui interne pour la réception de deux bagues 15, 16.

Comme représenté sur la Figure 2, les deux bagues 15, 16 présentent une section transversale droite identique et de forme carrée, les arêtes étant chanfreinées.

L'extrémité libre de la structure tissée 18 enveloppe ces bagues 15, 16 en étant engagée entre celles-ci pour décrire un S, cet engagement augmentant la résistance au glissement des faces de cette extrémité libre.

Bien entendu, l'engagement de l'extrémité libre de la structure tissée 18 dans le raccord 10 n'est pas limité à ce seul pliage en S mais peut être différent ou simplifié.

L'ancrage de l'extrémité libre de ladite structure tissée 18 dans le raccord 10 est ainsi obtenu uniquement par frottement des faces de cette extrémité libre de la structure tissée 18 avec les surfaces des bagues 15, 16 et de cette paroi interne.

Sur la Figure 2, une partie de fixation 17, ou encore capot, est représentée, laquelle permet l'assemblage du raccord 10 avec le raccord d'un autre module. Un tel assemblage peut être réalisé de manière connue par soudure ou boulonnage.

L'extrémité libre de la structure tissée 18 est donc ancrée dans ce raccord 10 en passant par une partie du canal 12 interne de sorte que le corps 11 principal du raccord est extérieur à la structure tissée 18.

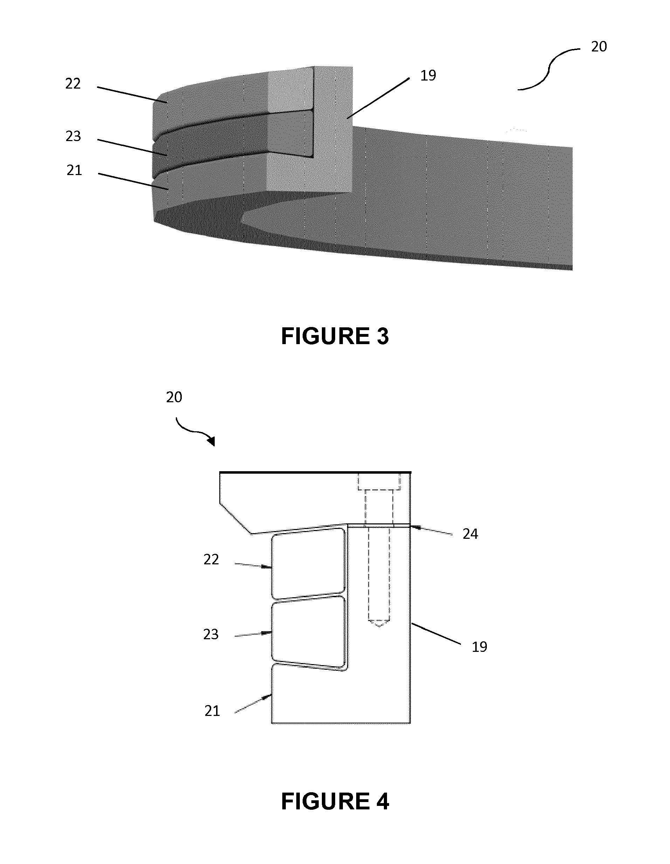

Les Figures 3 et 4 représentent schématiquement un module pour le transport d'un fluide, notamment de l'eau de mer, selon un autre mode de réalisation de la présente invention.

L'épaulement est ici placé sur la paroi latérale externe du corps principal 19 du raccord 20 de sorte que la face 21 d'appui est externe, ou encore tournée vers l'extérieur du raccord 20.

Les deux bagues 22, 23 sont reçues sur cette face d'appui en étant superposées et plaquées l'une contre l'autre et contre cette face 21 d'appui afin de maximiser les frottements de l'extrémité libre de la structure tissée 18 engagée dans ce raccord 20.

Ces bagues 22, 23 métalliques qui sont pleines, présentent des sections transversales droites distinctes, une première ayant une forme trapézoïdale et l'autre étant en forme de parallélogramme, de sorte qu'elles reposent l'une sur l'autre en étant en contact sur l'intégralité de leur face de contact.

De même, la face d'appui 21 présente une forme complémentaire de celle de la bague inférieure 23 venant en contact directement avec elle pour assurer un contact sur la totalité de leur face de contact.

On s'assure ainsi d'un frottement maximum entre l'extrémité libre de la structure tissée 18 engagée dans ce raccord 20, et les surfaces de ces bagues 22, 23 et de la paroi externe du corps 19 principal.

L'ancrage de l'extrémité libre de ladite structure tissée 18 dans le raccord 20 est ainsi obtenu uniquement par frottement des faces de cette extrémité libre de la structure tissée 18 avec les surfaces des bagues 22, 23, de cette paroi externe et d'une partie de fixation 24.

Cette partie de fixation 24 comporte en effet sur sa face interne une forme complémentaire de celle de la bague supérieure 22 pour assurer un plaquage de l'extrémité libre de la structure tissée 18 engagée dans le raccord 20 contre la face de cette bague 22, et par conséquent augmenter le coefficient de frottement.

L'extrémité libre de la structure tissée 18 est donc ancrée dans ce raccord 20 en passant par le pourtour externe du corps principal de ce raccord 20 de sorte que ce dernier se retrouve placé à l'intérieur de la structure tissée 18.

## Revendications

1. Module pour le transport d'un fluide, comprenant une structure tissée (18) formant une conduite tubulaire et au moins un raccord (10) d'extrémité placé à une extrémité de ladite structure tissée (18), ledit raccord (10) d'extrémité comprenant un corps (11) principal délimitant un canal (12) interne pour le passage dudit fluide, **caractérisé en ce que**
- la paroi interne dudit corps (11) délimitant ledit canal (12), ou la paroi externe dudit corps (11) délimitant la surface latérale externe de ce corps, étant annulaire et présentant au moins un épaulement (13) définissant une face (14) d'appui interne, respectivement externe, pour la réception d'au moins une bague (15, 16),
- l'ancrage de l'extrémité libre de ladite structure tissée (18) dans ledit raccord (10) est obtenu uniquement par frottement des faces de ladite extrémité libre avec les surfaces de ladite ou desdites bagues (15, 16) et de ladite paroi interne, respectivement externe, dudit corps (11) principal.

2. Module selon la revendication 1, **caractérisé en ce que** ledit raccord comprenant au moins deux bagues (15, 16), lesdites bagues sont reçues sur ladite face (14) d'appui en étant superposées ou placées en contact l'une à côté de l'autre pour emprisonner l'extrémité libre correspondante de ladite structure tissée (18).

3. Module selon la revendication 2, **caractérisé en ce que** ledit raccord (10) comportant deux bagues (15, 16), l'extrémité libre de ladite structure tissée (18) enveloppe lesdites bagues (15, 16) en étant engagée entre celles-ci pour décrire un S, ledit engagement augmentant la résistance au glissement des faces de ladite extrémité libre.

4. Module selon l'une quelconque des revendications 1 à 3, **caractérisé en ce que** ledit raccord (10) comporte une partie (17) de fixation à un raccord d'un autre module ou à une structure flottante.

5. Module selon l'une quelconque des revendications 1 à 4, **caractérisé en ce qu'**au moins une desdites bagues (15, 16) présente une section transversale droite, pleine ou creuse, de forme polygonale régulière ou non.

6. Module selon l'une quelconque des revendications 1 à 5, **caractérisé en ce que** lesdites bagues (15, 16) présentent une section transversale droite identique.

7. Module selon l'une quelconque des revendications 1 à 6, **caractérisé en ce qu'**au moins une desdites bagues (15, 16) présente des arêtes chanfreinées pour éviter d'endommager l'extrémité libre de ladite structure tissée (18).

8. Module selon l'une quelconque des revendications 1 à 7, **caractérisé en ce que** la surface externe d'au moins une desdites bagues (15, 16) comporte un revêtement antidérapant et/ou un relief de surface permettant d'accroître le coefficient de frottement entre les faces de l'extrémité libre de ladite structure tissée (18) et ladite bague.

9. Module selon l'une quelconque des revendications 1 à 8, **caractérisé en ce que** les extrémités libres de ladite structure tissée (18) présentent une armure distincte et/ou des fils de trame différents de la partie centrale de ladite structure tissée (18) pour autoriser une variation élastique du diamètre de ladite structure tissée (18).

10. Module selon la revendication 9, **caractérisé en ce que** l'armure de chaque extrémité libre est une armure toile.

11. Module selon la revendication 9 ou 10, **caractérisé en ce que** lesdits fils de trame de chaque extrémité libre de ladite structure tissée (18) sont réalisés dans un matériau plus élastique que celui constitutif des fils de trame de la partie centrale de ladite structure tissée (18).

12. Module selon l'une quelconque des revendications 1 à 11, **caractérisé en ce que** l'extrémité libre de ladite structure tissée (18) comporte des pièces tissées individuelles formant une corolle, chaque pièce tissée étant obtenue par découpe de fils de trame de ladite extrémité libre.

13. Module selon l'une quelconque des revendications 1 à 12, **caractérisé en ce que** ladite structure tissée (18) formant une conduite tubulaire de transport d'un fluide, est une structure tissée tridimensionnelle d'un seul tenant.

14. Conduite flexible de transport d'un fluide, par exemple d'eau de mer, comprenant plusieurs modules selon l'une quelconque des revendications 1 à 13 assemblés entre eux.

15. Conduite flexible selon la revendication 14, **caractérisée en ce que**, pour chaque raccord (10) de ladite conduite, ledit épaulement est placé sur la paroi interne du corps (11) principal correspondant de sorte que la face (14) d'appui étant ainsi interne, l'extrémité libre de ladite structure tissée correspondante est ancrée dans ledit raccord en passant dans son canal interne et **en ce que** lesdites structures tissées des différents modules ainsi assemblés définissent un chemin continu pour le passage dudit fluide, ce dernier étant ainsi uniquement en contact avec lesdites structures tissées lors de son transport.

16. Méthode de raccordement d'un raccord (10) d'extrémité et d'une structure tissée (18) définissant une conduite tubulaire de transport de fluide, ledit raccord (10) d'extrémité comprenant un corps (11) principal délimitant un canal (12) interne pour le passage dudit fluide, **caractérisée en ce que** la paroi interne dudit corps délimitant ledit canal (12) ou la paroi externe dudit corps délimitant sa surface latérale externe, étant annulaire et présentant au moins un épaulement (13) définissant une face (14) d'appui interne, respectivement externe, pour la réception de deux bagues (15, 16), lesquelles sont destinées à être reçues sur ladite face (14) d'appui en étant superposées ou placées en contact l'une à côté de l'autre pour emprisonner l'extrémité libre correspondante de ladite structure tissée (18), ladite méthode comporte les étapes suivantes:
a) on introduit l'extrémité libre de ladite structure tissée (18) entre l'ensemble formé par lesdites deux bagues (15, 16), et ladite paroi interne ou externe dudit corps annulaire,
b) on retourne l'extrémité libre de ladite structure tissée (18), une première fois vers l'arrière en la coudant sur ledit ensemble, puis, lesdites bagues (15, 16) étant espacées l'une de l'autre, une seconde fois en la pliant sur la bague la plus proche de ladite surface (14) d'appui de sorte à venir envelopper cette bague,
c) on plaque l'autre bague contre la bague ainsi enveloppée de sorte que l'extrémité libre de ladite structure tissée (18) est emprisonnée entre ces deux bagues (15, 16), puis
d) ayant engagé l'extrémité libre de ladite structure tissée (18) entre cette autre bague et l'ensemble formé par ladite paroi interne ou externe et une portion de ladite extrémité libre résultant de l'étape a), on retourne l'extrémité libre de ladite structure tissée (18) pour envelopper cette autre bague, le passage de l'extrémité libre de ladite structure tissée (18) entre ces bagues (15, 16) définissant une forme en S de sorte que l'ancrage de l'extrémité libre de ladite structure tissée (18) dans ledit raccord (10) est obtenu uniquement par frottement des faces de ladite extrémité libre avec les surfaces desdites bagues (15, 16) et de ladite paroi interne, respectivement externe, dudit corps annulaire.

17. Méthode selon la revendication 16, **caractérisée en ce qu'**on assemble une partie de fixation audit corps principal, ladite partie de fixation venant plaquer l'extrémité libre de ladite structure tissée (18) sur la bague qu'elle enveloppe au moins partiellement.

18. Méthode selon la revendication 16 ou 17, **caractérisée en ce que** préalablement, on coupe des fils de trame de l'extrémité libre de ladite structure tissée (18) pour définir des pièces tissées individuelles de manière à faciliter l'engagement de ladite extrémité libre dans ledit raccord (10).

19. Dispositif pour la mise en oeuvre de la méthode de raccordement d'un raccord (10) d'extrémité et d'une structure tissée (18) définissant une conduite tubulaire de transport de fluide selon l'une quelconque des revendications 16 à 18, **caractérisé en ce qu'**il comprend :
- une paroi annulaire définissant une zone centrale de réception de ladite structure tissée (18),
- la surface latérale externe de ladite paroi annulaire comprend un support pour recevoir et supporter ledit raccord (10) et des moyens de déplacement individuel de chaque bague dudit raccord (10) par rapport à ladite surface (14) d'appui interne ou externe.

20. Dispositif selon la revendication 19, **caractérisé en ce que** chaque moyen de déplacement individuel d'une bague (15, 16) comporte des bras de préhension de ladite bague, lesquels sont mobiles en translation le long de ladite paroi annulaire pour éloigner ou rapprocher la bague (15, 16) correspondante de ladite surface (14) d'appui tout en étant escamotables ou de dimension longitudinale ajustable pour autoriser le passage de l'extrémité libre de ladite structure tissée (18).
